# EUROPEAN PATENT APPLICATION

(11) **EP 3 851 952 A2**
(43) Date of publication of application: **21.07.2021**
(21) Application number: 21161996.0
(22) Date of filing: 11.03.2021
(51) Int. Cl.: G06F 3/16, G10L 15/22

(54) **SIGNAL PROCESSING METHOD, SIGNAL PROCESSING DEVICE, AND ELECTRONIC DEVICE**

(30) Priority: 12.03.2020 CN 202010169610
(71) Applicant: BEIJING BAIDU NETCOM SCIENCE AND TECHNOLOGY CO. LTD., 100085 Beijing (CN)
(72) Inventor: GENG, Lei, Beijing, 100085 (CN)
(74) Representative: Studio Torta S.p.A.

(57) **Abstract**

A signal processing method, a signal processing device, and an electronic device are provided, which relate to the field of signal processing technologies. The specific implementation solution thereof is: acquiring a first input audio signal and a first operation mode corresponding to the first input audio signal; processing the first input audio signal by a first signal processing algorithm in a digital signal processing chip, and outputting a first target signal, wherein, the digital signal processing chip is integrated with a plurality of signal processing algorithms, and the first signal processing algorithm is an algorithm matching the first operation mode among the plurality of signal processing algorithms.

## Description

### TECHNICAL FIELD

The present application relates to the field of a signal processing technology in computer technologies, and specifically relates to a signal processing method, a signal processing device, and an electronic device.

### BACKGROUND

In recent years, as speech recognition technologies mature, more and more electronic devices have speech interaction functions, and the speech interaction functions are also inseparable from a support from front-end audio signal processing algorithms.

At present, electronic devices use, in various operation modes, fixed signal processing algorithms to process inputted audio signals, which likely leads to a poor processing effect of the audio signals.

### SUMMARY

The present application provides a signal processing method, a signal processing device and an electronic device, to solve the problem of a poor effect of processing an audio signal.

In a first aspect, an embodiment of the present application provides a signal processing method, and the method includes: acquiring a first input audio signal and a first operation mode corresponding to the first input audio signal; processing the first input audio signal by a first signal processing algorithm in a digital signal processing chip, and outputting a first target signal, wherein, the digital signal processing chip is integrated with a plurality of signal processing algorithms, and the first signal processing algorithm is an algorithm matching the first operation mode among the plurality of signal processing algorithms.

In the signal processing method of the embodiment, since the digital signal processing chip is integrated with a plurality of signal processing algorithms, after the first input audio signal and the first operation mode are acquired, the first signal processing algorithm matching the first operation mode among the plurality of signal processing algorithms may be used to process the first input audio. It is realized that different signal processing algorithms are used to process the input audio signal in different operation modes, thereby improving an effect of processing the audio signal.

Optionally, subsequent to outputting the first target signal, the method further includes: receiving a switching command through the digital signal processing chip, and acquiring a target operation mode corresponding to the switching command, wherein, the switching command is a command sent by a main processor in a case that, after the first target signal is received, the target operation mode is determined based on the first target signal and the target operation mode is switched to; processing, in a case that a second input audio signal is received, the second input audio signal by a target signal processing algorithm in the digital signal processing chip, and outputting a second target signal, wherein, the target signal processing algorithm is an algorithm matching the target operation mode among the plurality of signal processing algorithms.

That is, in the present embodiment, the target signal processing algorithm corresponding to the target operation mode may be switched to for further processing, which may adapt to changes of operation modes, improve flexibility of selecting the signal processing algorithm, and improve an audio processing effect.

Optionally, subsequent to outputting the first target signal, the method further includes: switching, in a case that the first operation mode is a speech recognition operation mode, the first operation mode to a standby operation mode through the main processor if no audio signal is received within a preset time period; processing, in a case that a third input audio signal is received, the third input audio signal by a standby speech wake-up algorithm in the digital signal processing chip, outputting, in a case that a preset wake-up word is detected in the third input audio signal through the standby speech wake-up algorithm, a wake-up signal to the main processor, wherein, the wake-up signal is used by the main processor to switch the standby operation mode to the speech recognition operation mode based on the wake-up signal, and the standby speech wake-up algorithm is an algorithm matching the standby operation mode among the plurality of signal processing algorithms.

In this way, not only the power consumption may be reduced, but also it is detected by the standby speech wake-up algorithm whether there is a preset wake-up word in the third input audio signal. In a case that the preset wake-up word is detected in the third input audio by the standby speech wake-up algorithm, a wake-up signal is outputted to the main processor, which may wake up the main processor. After the main processor wakes up, the main processor is in the speech recognition operation mode, and subsequently performs speech interaction, that is, the user may implement speech interaction with the main processor.

Optionally, the plurality of signal processing algorithms includes a standby speech wake-up algorithm, a speech noise-reduction algorithm, and a communication noise-reduction algorithm.

In this way, an algorithm matching the first operation mode among the standby speech wake-up algorithm, the speech noise-reduction algorithm, and the communication noise-reduction algorithm may be used for signal processing, adapt to the first operation mode, which improves processing effect of the audio signal.

In a second aspect, an embodiment of the present application provides a signal processing device, and the device includes: a first acquisition module, configured to acquire a first input audio signal and a first operation mode corresponding to the first input audio signal; a first processing module, configured to process the first input audio signal by a first signal processing algorithm in a digital signal processing chip, and output a first target signal, wherein, the digital signal processing chip is integrated with a plurality of signal processing algorithms, and the first signal processing algorithm is an algorithm matching the first operation mode among the plurality of signal processing algorithms.

Optionally, the device further includes: a first reception module, configured to receive a switching command through the digital signal processing chip, and acquire a target operation mode corresponding to the switching command, wherein, the switching command is a command sent by a main processor in a case that, after the first target signal is received, the target operation mode is determined based on the first target signal and the target operation mode is switched to; a second processing module, configured to process, in a case that a second input audio signal is received, the second input audio signal by a target signal processing algorithm in the digital signal processing chip, and output a second target signal, wherein, the target signal processing algorithm is an algorithm matching the target operation mode among the plurality of signal processing algorithms.

Optionally, the device further includes: a switching module, configured to switch, in a case that the first operation mode is a speech recognition operation mode, the first operation mode to a standby operation mode through the main processor if no audio signal is received within a preset time period; a third processing module, configured to process, in a case that a third input audio signal is received, the third input audio signal by a standby speech wake-up algorithm in the digital signal processing chip, output, in a case that a preset wake-up word is detected in the third input audio signal through the standby speech wake-up algorithm, a wake-up signal to the main processor, wherein, the wake-up signal is used by the main processor to switch the standby operation mode to the speech recognition operation mode based on the wake-up signal, and the standby speech wake-up algorithm is an algorithm matching the standby operation mode among the plurality of signal processing algorithms.

Optionally, the plurality of signal processing algorithms includes a standby speech wake-up algorithm, a speech noise-reduction algorithm, and a communication noise-reduction algorithm.

In a third aspect, an embodiment of the present application further provides an electronic device, and the device includes: at least one processor; and a storage communicatively connected to the at least one processor, wherein the storage stores therein an instruction configured to be executed by the at least one processor, and the at least one processor is configured to execute the instruction, to implement the method provided in various embodiments of the present application.

In a fourth aspect, an embodiment of the present application further provides a non-transitory computer-readable storage medium storing therein computer instructions, wherein the computer instructions are used for causing a computer to implement the method provided in various embodiments of the present application.

### BRIEF DESCRIPTION OF THE DRAWINGS

The drawings are used to better understand the solutions of the present application and constitute no limitation to the present application.
Fig. 1 is a schematic flowchart of a signal processing method according to an embodiment provided in the present application;
Fig. 2 is a principle diagram of a signal processing method according to an embodiment provided in the present application;
Fig. 3 is a module diagram of a standby speech wake-up algorithm according to an embodiment provided in the present application;
Fig. 4 is a module diagram of a speech noise-reduction algorithm according to an embodiment provided in the present application;
Fig. 5 is a module diagram of a communication noise-reduction algorithm according to an embodiment provided in the present application;
Fig. 6 is a structural diagram of a signal processing device according to an embodiment provided in the present application;
Fig.7 is a block diagram of an electronic device for implementing a signal processing method according to an embodiment of the present application.

### DETAILED DESCRIPTION

In the following description, numerous details of the embodiments of the present application, which should be deemed merely as exemplary, are set forth with reference to accompanying drawings to provide thorough understanding of the embodiments of the present application. Therefore, those skilled in the art will appreciate that modifications and replacements may be made in the described embodiments without departing from the scope and the spirit of the present application. Further, for clarity and conciseness, descriptions of known functions and structures are omitted hereinafter.

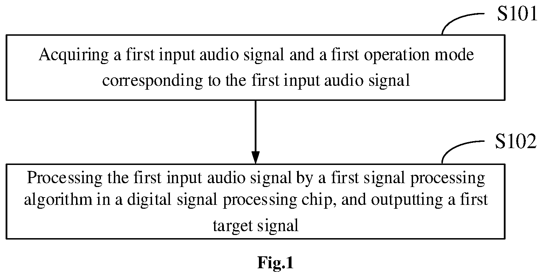

As shown in Fig.1, an embodiment of the present application provides a signal processing method, and the method includes the following steps S101-S102.

Step S101: acquiring a first input audio signal and a first operation mode corresponding to the first input audio signal.

The signal processing method may be applied to an electronic device, and the electronic device may include a digital signal processing chip and a main processor connected to the digital signal processing chip. First, the first input audio signal may be a digital signal, that is, an audio signal acquired after analog-to-digital conversion is performed on a collected analog audio signal inputted by a user. The first input audio signal may be inputted to the digital signal processing chip, that is, the first input audio signal may be acquired through the digital signal processing chip. In addition, the first operation mode corresponding to the first input audio signal may also be acquired. The main processor may operate in different operation modes. The first operation mode may be understood as an operation mode in which the main processor operates when the first input audio signal is acquired. For example, the main processor may operate in any one of a standby operation mode, a speech recognition operation mode, and a communication operation mode. The first operation mode may be any one of the standby operation mode (that is, the main processor has been powered on and is waiting to be awakened to enter an operating state), the speech recognition operation mode (may be understood as an operating state of speech interaction), and the communication operation mode (may be understood as an operating state in which communication is undergoing). The main processor may inform, by way of commands, the digital signal processing chip of the operation mode in which the main processor operates.

Step S 102: processing the first input audio signal by a first signal processing algorithm in a digital signal processing chip, and outputting a first target signal.

The digital signal processing chip is integrated with a plurality of signal processing algorithms, and the first signal processing algorithm is an algorithm matching the first operation mode among the plurality of signal processing algorithms.

That is, the digital signal processing chip is integrated with a plurality of signal processing algorithms. After the first input audio signal and the first operation mode are acquired, the first input audio signal may be processed by a first signal processing algorithm matching the first operation mode in the digital signal processing chip. It may be understood that, different first signal processing algorithms may be adopted for different first operation modes. It is realized that different signal processing algorithms are used to process the input audio signal in different operation modes, thereby improving a processing effect of the audio signal. It should be noted that, the first target signal may be outputted to the main processor through the digital signal processing chip, and the main processor performs corresponding operations based on the first target signal and the current first operation mode upon receiving the first target signal. For example, the first operation mode is the speech recognition operation mode. After receiving the first target signal, the main processor may output a corresponding response signal according to the first target signal. For example, the first input audio signal is a signal used to control playing a music, and the main processor may play a music after receiving the first target signal. A firmware with a plurality of signal processing algorithms may be stored in a flash memory. After the digital signal processing chip is powered, the firmware with the plurality of signal processing algorithms may be quickly loaded from the flash memory.

In the signal processing method of the embodiment, since the digital signal processing chip is integrated with a plurality of signal processing algorithms. After the first input audio signal and the first operation mode are acquired, the first signal processing algorithm matching the first operation mode among the plurality of signal processing algorithms may be used to process the first input audio signal. It is realized that different signal processing algorithms are used to process the input audio signal in different operation modes, thereby improving the processing effect of the audio signal.

In an embodiment, subsequent to outputting the first target signal, the method further includes: receiving a switching command through the digital signal processing chip, and acquiring a target operation mode corresponding to the switching command, wherein, the switching command is a command sent by the main processor in a case that, after the first target signal is received, the target operation mode is determined based on the first target signal and the target operation mode is switched to; processing, in a case that a second input audio signal is received, the second input audio signal by a target signal processing algorithm in the digital signal processing chip, and outputting a second target signal, wherein, the target signal processing algorithm is an algorithm matching the target operation mode among the plurality of signal processing algorithms.

The first target signal is outputted to the main processor through the digital signal processing chip, and the main processor may determine the target operation mode according to the first target signal. If the current first operation mode is different from the target operation mode, the main processor will switch to the target operation mode and send a switching command to the digital signal processing chip, and the digital signal processing chip may acquire the corresponding target operation mode according to the switching command. In this case, if the second input audio signal is subsequently received, the digital signal processing chip uses the target signal processing algorithm matching the target operation mode among the plurality of signal processing algorithms to process the second input audio signal, and outputs the second target signal. For example, the first operation mode is a speech recognition operation mode, and the digital signal processing chip uses the first target signal processing algorithm to process the first input audio signal, and outputs the first target signal to the main processor. For example, the first input audio signal of a voice call made with A or a phone call made with B may include noise, which needs to be processed for noise reduction before being outputted to the main processor. After receiving the first target signal, the main processor may determine that the target operation mode is the communication operation mode according to the first target signal, and then may switch to the communication operation mode, and send a switching command for the communication operation mode to the digital signal processing chip. After the digital signal processing chip receives the switching command, the digital signal processing chip may know that the main processor is currently in the communication operation mode. After receiving the second input audio signal, the digital signal processing chip may process the second input audio signal through a signal processing algorithm corresponding to the communication operation mode, and output the second target signal to the main processor. It should be noted that, the switching command may include algorithm parameters corresponding to the target signal processing algorithm corresponding to the target operation mode. For example, if the target signal processing algorithm involves a signal amplification sub-algorithm and an acoustic echo cancellation sub-algorithm, the algorithm parameters may include amplification parameters and algorithm parameters corresponding to the acoustic echo cancellation sub-algorithm.

That is, in the present embodiment, the target signal processing algorithm corresponding to the target operation mode may be switched to for further processing, which may adapt to changes of the operation modes, improve flexibility of selecting the signal processing algorithm, and improve an audio processing effect.

In an embodiment, subsequent to outputting the first target signal, the method further includes: switching, in a case that the first operation mode is the speech recognition operation mode, the first operation mode to a standby operation mode through the main processor if no audio signal is received within a preset time period; processing, in a case that a third input audio signal is received, the third input audio signal by a standby speech wake-up algorithm in the digital signal processing chip, outputting, in a case that a preset wake-up word is detected in the third input audio signal through the standby speech wake-up algorithm, a wake-up signal to the main processor, wherein, the wake-up signal is used by the main processor to switch the standby operation mode to the speech recognition operation mode based on the wake-up signal, and the standby speech wake-up algorithm is an algorithm matching the standby operation mode among the plurality of signal processing algorithms.

In a case that the first operation mode is the speech recognition operation mode, in order to reduce power consumption, the main processor switches the first operation mode to a standby operation mode if no audio signal is received within a preset time period. If the third input audio signal is subsequently received, the standby speech wake-up algorithm in the digital signal processing chip is used to process the third input audio signal, so that the used signal processing algorithm is adapted to the standby operation mode. The third input audio signal is processed by a standby speech wake-up algorithm in the digital signal processing chip, that is, the third input audio signal is detected by the standby speech wake-up algorithm. In a case that a preset wake-up word is detected in the third input audio signal, the wake-up signal is outputted to the main processor. After receiving the wake-up signal, the main processor may switch the standby operation mode to the speech recognition working mode to realize wake-up.

In this way, not only the power consumption may be reduced, but also it is detected by the standby speech wake-up algorithm whether there is a preset wake-up word in the third input audio signal. In a case that the preset wake-up word is detected in the third input audio signal by the standby speech wake-up algorithm, the wake-up signal is outputted to the main processor, to wake up the main processor. After the main processor wakes up, the main processor is in the speech recognition operation mode, and subsequently speech interaction may be implemented, that is, a user may implement speech interaction with the main processor.

In an embodiment, the plurality of signal processing algorithms includes a standby speech wake-up algorithm, a speech noise-reduction algorithm, and a communication noise-reduction algorithm. The standby speech wake-up algorithm corresponds to the standby operation mode. The speech noise-reduction algorithm is a noise-reduction algorithm, which is not limited here, and corresponds to the speech recognition operation mode. The communication noise-reduction algorithm is also a kind of noise-reduction algorithm, which is not limited here. The communication noise-reduction algorithm is different from the speech noise-reduction algorithm and corresponds to the communication operation mode. In this way, an algorithm matching the first operation mode among the standby speech wake-up algorithm, the speech noise-reduction algorithm, and the communication noise-reduction algorithm may be used for signal processing, adapt to the first operation mode, which improves the processing effect of the audio signal.

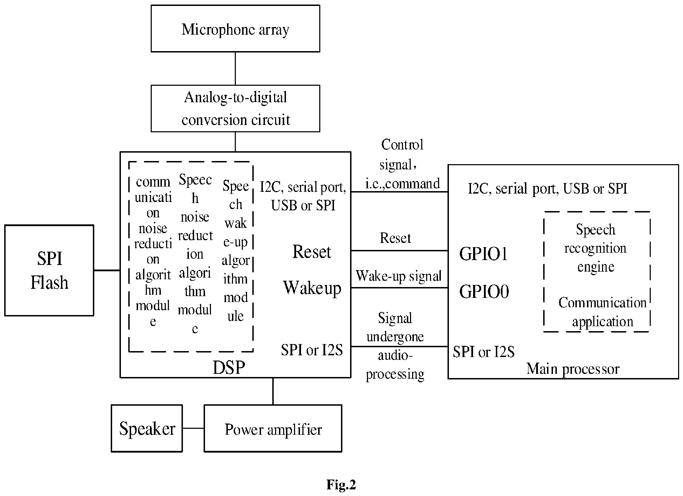

A procedure of the above method is described below with a specific embodiment. The method is applied to the above-mentioned electronic device including a digital signal processing chip and a main processor connected to the digital signal processing chip. The electronic device further includes a microphone array and an analog-to-digital conversion circuit. The analog-to-digital conversion circuit is connected between the microphone array and the digital signal processing chip. The analog-to-digital conversion circuit acquires an input analog audio signal from the microphone array, converts the input analog audio signal into a digital audio signal (for example, the first input audio signal, etc.) and outputs the digital audio signal to the digital signal processing chip. As shown in Fig.2, the digital signal processing chip is an audio digital signal processing chip, i.e., a DSP in Fig.2.

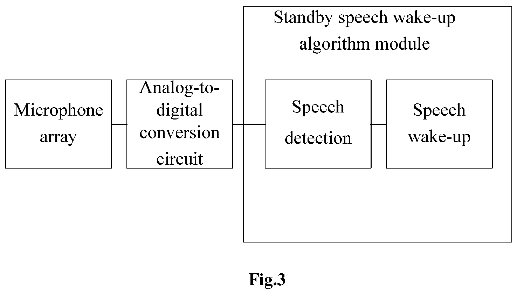

A firmware of the audio digital signal processing chip is integrated with a modular front-end signal algorithms (a plurality of signal processing algorithms), and the plurality of signal processing algorithms are different. After a smart hardware, i.e., the electronic device, is powered on, the main processor enters the standby operation mode, and the digital signal processing chip is in the default standby wake-up mode after the firmware including the algorithms is loaded. That is, the standby speech wake-up algorithm among the plurality of signal processing algorithms is in use, and an output of the analog-to-digital conversion circuit is used as an input of the standby speech wake-up algorithm. It may be understood that, the analog audio signal inputted by the user is acquired through the microphone array and is outputted to the analog-to-digital conversion circuit. The analog-to-digital conversion circuit performs an analog-to-digital conversion on the analog audio signal to acquire the input audio signal. Since the output of the analog-to-digital conversion circuit is the input of the standby speech wake-up algorithm, the standby speech wake-up algorithm performs detection based on the input audio signal. As shown in Fig.3, the standby speech wake-up algorithm may include a speech detection algorithm and a wake-up algorithm. It is detected by the speech detection algorithm whether a user's voice, i.e., a human voice, is included in the input audio signal. If a human voice is detected, a wake-up word detection is performed on the input audio signal through the wake-up algorithm. If a preset wake-up word (or a preset keyword, such as a wake-up word of XX, XX) is detected in the input audio signal, a wake-up signal is outputted to the main processor. After receiving the wake-up signal, the main processor may switch the standby operation mode to the speech recognition operation mode to realize wake-up.

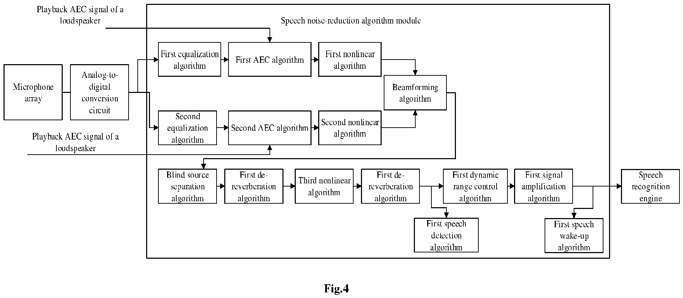

It should be noted that, when a preset wake-up word is detected, the digital signal processing chip triggers and wakes up a GPIO (General Purpose Input/Output) interface to output a trigger-level signal (corresponding to the wake-up signal) to the main processor, so that the main processor chip enters a normal operation mode of booting. In the present embodiment, the main processor chip may enter the speech recognition operation mode. After entering the speech recognition operation mode, the main processor chip sends a command to the digital signal processing chip through an I2C (a simple, two-way two-wire synchronous serial bus), a serial port, a USB (universal serial bus) or an SPI (serial peripheral interface) and other interfaces for setting a register of the digital signal processing chip, uses the output of the analog-to-digital conversion circuit as the input of a speech noise-reduction algorithm in the speech recognition operation mode, and sets the algorithm parameters of the speech noise-reduction algorithm in the speech recognition operation mode among the plurality of modular signal processing algorithms in the firmware. There are many speech noise-reduction algorithms, which are not limited here. For example, as shown in Fig.4, a modular diagram of a speech signal noise-reduction algorithm is illustrated, the speech signal noise-reduction algorithm includes a first equalization algorithm module, a second equalization algorithm module, a first acoustic echo cancellation algorithm module (in addition, it is necessary to input a playback AEC (Acoustic Echo Cancellation) signal of a loudspeaker, such as a speaker. The playback AEC signal may be processed by a power amplifier processing module and then inputted to a third acoustic echo cancellation algorithm), a first nonlinear processing algorithm module, a second acoustic echo cancellation algorithm module (it is similar to the first acoustic echo cancellation algorithm module, in addition, it is necessary to input the playback AEC signal of the loudspeaker, such as the speaker. The playback AEC signal may be processed by the power amplifier processing module and then inputted to the third acoustic echo cancellation algorithm), a second nonlinear processing algorithm module, a beamforming algorithm module, a blind source separation algorithm module, a first de-reverberation algorithm module, a third nonlinear processing module, a first dynamic range control algorithm module, a first signal amplification algorithm module, a first speech detection algorithm module, and a first speech wake-up algorithm module. The connection relationship of the modules is shown in Fig.4, and the target signal outputted by the first signal amplification algorithm module is outputted to a speech recognition engine in the main processor. Noise reduction to the audio signal may be achieved through the above-mentioned speech noise-reduction algorithms.

After receiving the command, the digital signal processing chip may acquire the corresponding target operation mode, i.e., the speech recognition operation mode. In the speech recognition mode, after subsequently receiving the input audio signal from the analog-to-digital conversion circuit, speech interaction is performed. A subsequently received input audio signal undergoes noise-reduction processing through the speech noise-reduction algorithm and is outputted to the main processor, and the main processor makes a response so as to realize speech interaction.

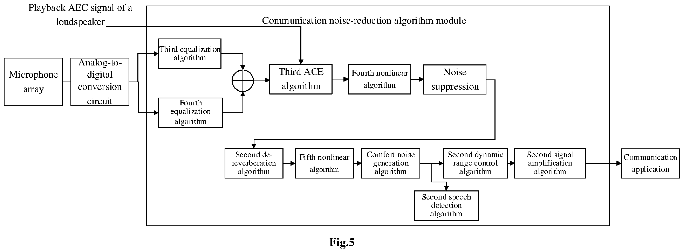

After the main processor enters the speech recognition operation mode, the main processor may also determine the target operation mode for the subsequent received input audio signal, for example, when the main processor recognizes that an audio signal inputted by the user needs communication to be performed (for example, the audio signal includes "dial A's phone number"), the main processor sends a command through an interface, such as an I2C, a serial port, an USB, or a SPI, sets a register of the digital signal processing chip, and sets algorithm parameters of the communication noise-reduction algorithm of the plurality of modular front-end signal processing algorithms in the firmware; after a communication application is completed, a chip of the main processor sends a command to set a register of the digital signal processing chip through an interface, such as the I2C, the serial port, the USB or the SPI, and uses the output of the analog-to-digital conversion circuit as the input to the communication noise-reduction algorithm in the communication operation mode, and sets the algorithm parameters of the communication noise-reduction algorithm in the communication operation mode of the plurality of modular signal processing algorithms in the firmware. There are many communication noise-reduction algorithms, which are not limited here. For example, as shown in Fig.5, a block diagram of a communication noise-reduction algorithm is illustrated, the communication noise-reduction algorithm includes a third equalization algorithm module, a fourth equalization algorithm module, a summation algorithm module, a third acoustic echo cancellation algorithm (in addition, it is necessary to input the playback AEC signal of the loudspeaker such as the speaker. The playback AEC signal may be processed by the power amplifier processing module and then inputted to the third acoustic echo cancellation algorithm module), a fourth nonlinear processing algorithm module, a noise suppression algorithm module, a second de-reverberation algorithm module, a fifth nonlinear processing module, a comfort noise-generation algorithm module, a second dynamic range control algorithm module, a second signal amplification algorithm module and a second speech detection algorithm module. Connection relationship among the modules is shown in Fig.5, and the target signal outputted by the second signal amplification algorithm module is outputted to a communication application in the main processor. Noise reduction to the audio signal may be achieved through the above-mentioned communication noise-reduction algorithm.

After entering the speech recognition operation mode, if there is no speech interaction within a defined preset time duration (such as 5 minutes, etc.), that is, no audio signal is received, and the main processing chip enters the standby operation mode, that is, low power consumption is realized. Before the main processing chip enters the standby operation mode, the main processing chip sends a command through an interface, such as an I2C, a serial port, an USB or an SPI to set a register of the digital signal processing chip, and sets algorithm parameters of the speech wake-up algorithm in a standby mode, having a low master frequency and a low power consumption, in the plurality of modular front-end signal processing algorithms in the firmware.

In the embodiment of the present application, the audio digital signal processing chip may be used more flexibly in various product applications, and the best user experience may be achieved in various applications. Average power consumption of the electronic device may be reduced by using the solution of the embodiment of the present application and a lifetime of the electronic device may be prolonged. There is no need to perform an overall upgrade on the firmware for different applications (corresponding to different application scenarios), so as to reduce the number of firmware upgrades, thereby extending the lifetime of a Flash memory (which has a limited number of erasing and writing times).

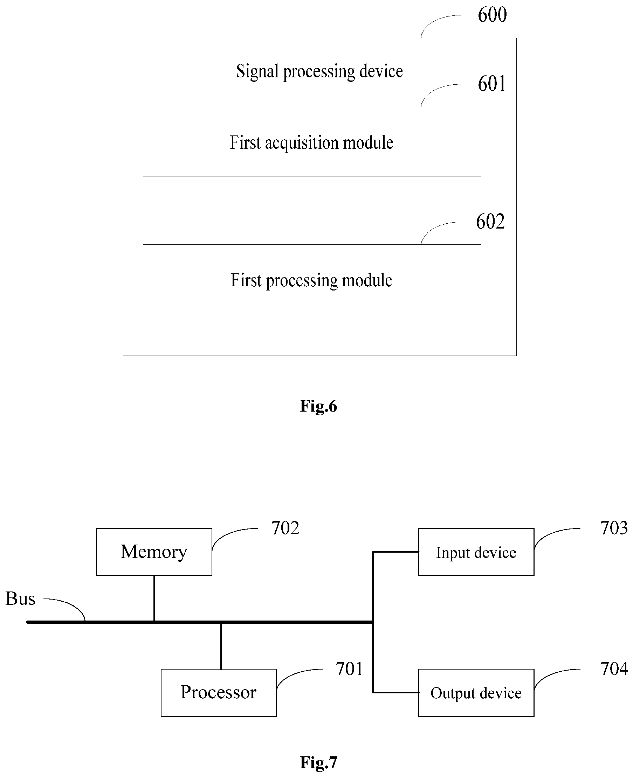

Referring to Fig.6, an embodiment of the present application provides a signal processing device 600, and the device includes: a first acquisition module 601, configured to acquire a first input audio signal and a first operation mode corresponding to the first input audio signal; a first processing module 602, configured to process the first input audio signal by a first signal processing algorithm in a digital signal processing chip, and output a first target signal, wherein, the digital signal processing chip is integrated with a plurality of signal processing algorithms, and the first signal processing algorithm is an algorithm matching the first operation mode among the plurality of signal processing algorithms.

In an embodiment, the device further includes: a first reception module, configured to receive a switching command through the digital signal processing chip, and acquire a target operation mode corresponding to the switching command, wherein, the switching command is a command sent by a main processor in a case that, after the first target signal is received, the target operation mode is determined based on the first target signal and the target operation mode is switched to; a second processing module, configured to process, in a case that a second input audio signal is received, the second input audio signal by a target signal processing algorithm in the digital signal processing chip, and output a second target signal, wherein, the target signal processing algorithm is an algorithm matching the target operation mode among the plurality of signal processing algorithms.

In an embodiment, the device further includes: a switching module, configured to switch, in a case that the first operation mode is a speech recognition operation mode, the first operation mode to a standby operation mode through the main processor if no audio signal is received within a preset time period; a third processing module, configured to process, in a case that a third input audio signal is received, the third input audio signal by a standby speech wake-up algorithm in the digital signal processing chip, output, in a case that a preset wake-up word is detected in the third input audio signal through the standby speech wake-up algorithm, a wake-up signal to the main processor, wherein, the wake-up signal is used by the main processor to switch the standby operation mode to the speech recognition operation mode based on the wake-up signal, and the standby speech wake-up algorithm is an algorithm matching the standby operation mode among the plurality of signal processing algorithms.

In an embodiment, the plurality of signal processing algorithms includes a standby speech wake-up algorithm, a speech noise-reduction algorithm, and a communication noise-reduction algorithm.

The signal processing device of the foregoing embodiments is a device that implement the signal processing method of the foregoing embodiments, and have corresponding technical features and corresponding technical effects, which will not be repeated here.

According to embodiments of the present application, an electronic device and a readable storage medium are further provided.

As shown in Fig.7, a block diagram of an electronic device of a signal processing method according to the embodiments of the present application is illustrated. The electronic device is intended to represent all kinds of digital computers, such as a laptop computer, a desktop computer, a work station, a personal digital assistant, a server, a blade server, a main frame or other suitable computers. The electronic device may also represent all kinds of mobile devices, such as a personal digital assistant, a cell phone, a smart phone, a wearable device and other similar computing devices. The components shown here, their connections and relationships, and their functions, are meant to be exemplary only, and are not meant to limit implementations of the present application described and/or claimed herein.

As shown in Fig.7, the electronic device includes: one or more processors 701, a memory 702, and interfaces for connecting various components, including a high-speed interface and a low-speed interface. The various components are interconnected using different buses and may be mounted on a common motherboard or mounted in another manner as desired. The processors may process instructions configured to be executed in the electronic device, and the instructions include instructions stored in the memory or on the memory to display graphical information of GUM on an external input/output device (such as a display device coupled to the interface). In other embodiments, multiple processors and/or multiple buses may be used with multiple memories, if necessary. Also, multiple electronic devices may be connected, and each electronic device provides some of the necessary operations (e.g., in a server array, a group of blade servers, or a multi-processor system). Fig.7 illustrates a single processor 701 as an example.

The memory 702 is a non-transitory computer-readable storage medium provided herein. The memory stores therein instructions executable by at least one processor to cause the at least one processor to implement the signal processing method according to the present application. The non-transitory computer-readable storage medium of the present application stores therein computer instructions for causing a computer to implement the signal processing method according to the present application.

The memory 702, as a non-transitory computer-readable storage medium, may be used to store non-transitory software programs, non-transitory computer-executable programs, and modules, such as program instructions/modules (e.g., the first acquisition module 601 and the first processing module 602 shown in Fig.6) corresponding to the signal processing method in the embodiments of the present application. By executing the non-transitory software programs, instructions and modules stored in the memory 702, the processor 701 performs various functional applications and data processing in the server, i.e., implements the signal processing method in the method embodiments described above.

The memory 702 may include a program storage area and a data storage area, where the program storage area may store an operating system, and an application program required for at least one function; and the data storage area may store data created according to usage of the electronic device having a keyboard and a display. In addition, the memory 702 may include a high speed random access memory, and may also include a non-transitory memory, such as at least one magnetic disk storage device, a flash memory device, or other non-transitory solid state storage device. In some embodiments, the memory 702 may optionally include a memory remotely located with respect to the processor 701. These remote memories may be connected via a network to the electronic device having a keyboard and a display. Examples of the network mentioned above include, but are not limited to, the Internet, an intranet, a local area network, a mobile communication network, and a combination thereof.

The electronic device for implementing the signal processing method may further include: an input device 703 and an output device 704. The processor 701, the memory 702, the input device 703, and the output device 704 may be connected to each other via a bus or in other ways. In Fig.7, a connection by a bus is taken as an example.

The input device 703 may receive inputted numeric or character information and generate key signal inputs related to user settings and functional controls of the electronic device having a keyboard and a display. For example, the input device may include a touch screen, a keypad, a mouse, a trackpad, a touch pad, a pointing stick, one or more mouse buttons, a trackball, a joystick, etc. The output device 704 may include a display device, an auxiliary lighting device (e.g., LED), a tactile feedback device (e.g., a vibration motor), etc. The display device may include, but is not limited to, a liquid crystal display (LCD), a light emitting diode (LED) display, and a plasma display. In some embodiments, the display device may be a touch screen.

Various embodiments of systems and techniques described herein can be implemented in a digital electronic circuit system, an integrated circuit systems, a dedicated ASMC (application specific integrated circuits), computer hardware, firmware, software, and/or combinations thereof. These various embodiments may include implementation in one or more computer programs that may be executed and/or interpreted by a programmable system including at least one programmable processor. The programmable processor may be a dedicated or general purpose programmable processor, and may receive data and instructions from a storage system, at least one input device and at least one output device, and transmit the data and the instructions to the storage system, the at least one input device and the at least one output device.

These computing programs (also referred to as programs, software, software applications, or codes) include machine instructions of a programmable processor, and may be implemented using procedure-oriented and/or object-oriented programming languages, and/or assembly/machine languages. As used herein, the terms "machine-readable medium" and "computer-readable medium" refer to any computer program product, apparatus, and/or device (e.g., a magnetic disk, an optical disc, a memory, a programmable logic device (PLD)) for providing machine instructions and/or data to a programmable processor, including a machine-readable medium that receives machine instructions implemented as machine-readable signals. The term "machine-readable signal" refers to any signal used to provide machine instructions and/or data to a programmable processor.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or that includes a middle-ware component (e.g., an application server), or that includes a front-end component (e.g., a client computer having a graphical user interface or a Web browser through which a user can interact with an implementation of the system and technique described herein), or any combination of such back-end, middleware, or front-end components. The components of the system can be interconnected by any form or a medium of digital data communication (e.g., a communication network). Examples of communication networks include a local area network (LAN), a wide area network (WAN) and the Internet.

The computer system can include a client and a server. The client and server are generally remote from each other and typically interact through a communication network. The relationship between client and server arises by virtue of computer programs running on respective computers and having a client-server relationship with each other.

According to the technical solutions of the embodiments of the present application, since the digital signal processing chip integrates a plurality of signal processing algorithms, after the first input audio signal and the first operation mode are acquired, the first signal processing algorithm matching the first operation mode among the plurality of signal processing algorithms may be used to process the first input audio. It is realized that different signal processing algorithms are used to process the input audio signal in different operation modes, thereby improving a processing effect of the audio signal.

It is appreciated, all forms of processes shown above may be used, and steps thereof may be reordered, added or deleted. For example, as long as expected results of the technical solutions of the present application can be achieved, steps set forth in the present application may be performed in parallel, performed sequentially, or performed in a different order, and there is no limitation in this regard.

The foregoing specific implementations constitute no limitation on the protection scope of the present application. It is appreciated by those skilled in the art, various modifications, combinations, sub-combinations and replacements may be made according to design requirements and other factors. Any modifications, equivalent replacements and improvements made without deviating from the spirit and the principle of the present application shall be deemed as falling within the protection scope of the present application.

## Claims

1. A signal processing method, **characterized in that**, the method comprises:
acquiring a first input audio signal and a first operation mode corresponding to the first input audio signal;
processing the first input audio signal by a first signal processing algorithm in a digital signal processing chip, and outputting a first target signal, wherein, the digital signal processing chip is integrated with a plurality of signal processing algorithms, and the first signal processing algorithm is an algorithm matching the first operation mode among the plurality of signal processing algorithms.

2. The method according to claim 1, **characterized in that**, subsequent to outputting the first target signal, the method further comprises:
receiving a switching command through the digital signal processing chip, and acquiring a target operation mode corresponding to the switching command, wherein, the switching command is a command sent by a main processor in a case that, after the first target signal is received, the target operation mode is determined based on the first target signal and the target operation mode is switched to;
processing, in a case that a second input audio signal is received, the second input audio signal by a target signal processing algorithm in the digital signal processing chip, and outputting a second target signal, wherein, the target signal processing algorithm is an algorithm matching the target operation mode among the plurality of signal processing algorithms.

3. The method according to claim 1 or 2, **characterized in that**, subsequent to outputting the first target signal, the method further comprises:
switching, in a case that the first operation mode is a speech recognition operation mode, the first operation mode to a standby operation mode through the main processor if no audio signal is received within a preset time period;
processing, in a case that a third input audio signal is received, the third input audio signal by a standby speech wake-up algorithm in the digital signal processing chip, outputting, in a case that a preset wake-up word is detected in the third input audio signal through the standby speech wake-up algorithm, a wake-up signal to the main processor, wherein, the wake-up signal is used by the main processor to switch the standby operation mode to the speech recognition operation mode based on the wake-up signal, and the standby speech wake-up algorithm is an algorithm matching the standby operation mode among the plurality of signal processing algorithms.

4. The method according to claim 1, **characterized in that**, the plurality of signal processing algorithms comprises a standby speech wake-up algorithm, a speech noise-reduction algorithm, and a communication noise-reduction algorithm.

5. A signal processing device, **characterized in that**, the device comprises:
a first acquisition module, configured to acquire a first input audio signal and a first operation mode corresponding to the first input audio signal;
a first processing module, configured to process the first input audio signal by a first signal processing algorithm in a digital signal processing chip, and output a first target signal, wherein, the digital signal processing chip is integrated with a plurality of signal processing algorithms, and the first signal processing algorithm is an algorithm matching the first operation mode among the plurality of signal processing algorithms.

6. The device according to claim 5, **characterized in that**, the device further comprises:
a first reception module, configured to receive a switching command through the digital signal processing chip, and acquire a target operation mode corresponding to the switching command, wherein, the switching command is a command sent by a main processor in a case that, after the first target signal is received, the target operation mode is determined based on the first target signal and the target operation mode is switched to;
a second processing module, configured to process, in a case that a second input audio signal is received, the second input audio signal by a target signal processing algorithm in the digital signal processing chip, and output a second target signal, wherein, the target signal processing algorithm is an algorithm matching the target operation mode among the plurality of signal processing algorithms.

7. The device according to claim 5 or 6, **characterized in that**, the device further comprises:
a switching module, configured to switch, in a case that the first operation mode is a speech recognition operation mode, the first operation mode to a standby operation mode through the main processor if no audio signal is received within a preset time period;
a third processing module, configured to process, in a case that a third input audio signal is received, the third input audio signal by a standby speech wake-up algorithm in the digital signal processing chip, output, in a case that a preset wake-up word is detected in the third input audio signal through the standby speech wake-up algorithm, a wake-up signal to the main processor, wherein, the wake-up signal is used by the main processor to switch the standby operation mode to the speech recognition operation mode based on the wake-up signal, and the standby speech wake-up algorithm is an algorithm matching the standby operation mode among the plurality of signal processing algorithms.

8. The device according to claim 5, **characterized in that**, the plurality of signal processing algorithms comprises a standby speech wake-up algorithm, a speech noise-reduction algorithm, and a communication noise-reduction algorithm.

9. An electronic device, **characterized in that**, the electronic device comprises:
at least one processor; and
a storage communicatively connected to the at least one processor,
wherein the storage stores an instruction configured to be executed by the at least one processor, and the at least one processor is configured to execute the instruction, to implement the method according to any one of claims 1 to 4.

10. A non-transitory computer readable storage medium, storing therein a computer instruction, **characterized in that**, the computer instruction is configured to be executed by a computer, to implement the method according to any one of claims 1 to 4.
